# EUROPÄISCHE PATENTSCHRIFT

(11) **EP 0 477 519 B1**
(45) Veröffentlichungstag und Bekanntmachung des Hinweises auf die Patenterteilung: **14.12.1994**
(21) Anmeldenummer: 91113540.8
(22) Anmeldetag: 13.08.1991
(51) Int. Cl.: B60T 13/66, B60T 8/88

(54) **Elektro-pneumatisches Bremssystem**
Electro-pneumatic brake system
Système de freinage électropneumatique

(30) Priorität: 26.09.1990 DE 4030361
(43) Veröffentlichungstag der Anmeldung: 01.04.1992
(73) Patentinhaber: ROBERT BOSCH GMBH, 70442 Stuttgart (DE)
(72) Erfinder: Wrede, Juergen, Dipl.-Ing., W-7000 Stuttgart 50 (DE)

(56) Entgegenhaltungen:
- EP-A- 0 187 901
- EP-A- 0 330 149
- EP-A- 0 357 922
- EP-A- 0 410 584
- DE-A- 3 922 947
- GB-A- 2 195 156
- GB-A- 2 218 764
- US-A- 3 964 017

## Beschreibung

### Stand der Technik

Die Erfindung bezieht sich auf ein elektro-pneumatisches Bremssystem nach der Gattung des Anspruchs 1. Ein derartiges Bremssystem ist durch EP-A-0 357 922 bekannt. Dort werden während des Fahrzeugbetriebes Komponenten des Bremssystems wie das elektronische Steuergerät, die Raddrehzahl-Signalgeber, die Drucksensoren der Bremszylinder, der Bremswertgeber und die Bremsbeläge auf ihren Zustand hin durch elektrische Ansteuerung und Plausibilitätsprüfungen überwacht. Der steuerungsmäßige Aufwand hierfür ist groß. Außerdem werden für die Belagverschleißerkennung Sensoren verwendet, die selbst verschleißen und zu ersetzen sind.

Aufgabe der Erfindung ist es, den Zustand von Komponenten und der Gesamtanlage von elektro-pneumatischen Bremssystemen überwiegend mit dem Prüfmedium Druckluft sowie mit auf dem Fahrzeug vorhandenen oder wenigen zusätzlich einzubauenden Sensoren zu überwachen.

### Vorteile der Erfindung

Das eingangs genannte Bremssystem mit den kennzeichnenden Merkmalen des Anspruchs 1 hat den Vorteil, daß ohne teure und auszutauschende Sensoren der Verschleiß der Bremsbeläge anhand von Druckmeßwerten erfaßbar und überwachbar ist.

### Zeichnung

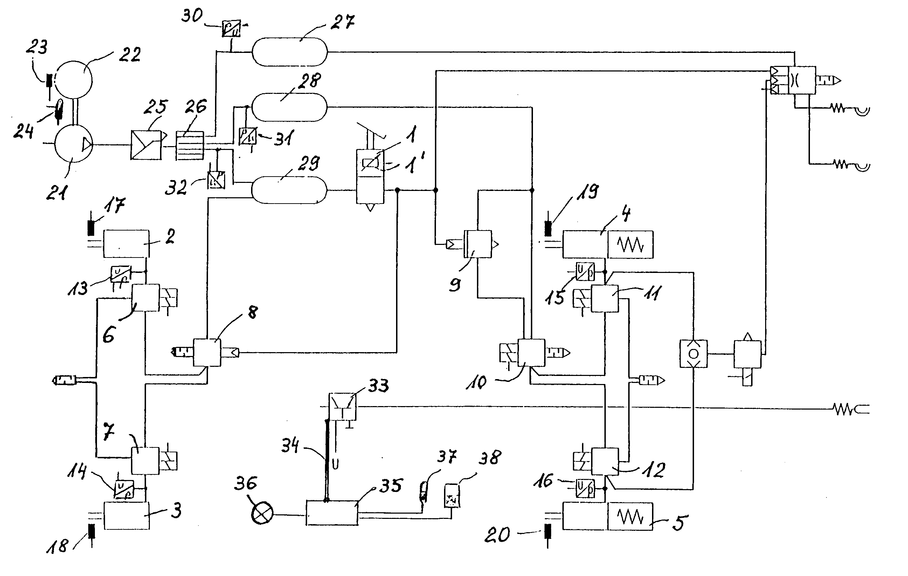

Ein Ausführungsbeispiel der Erfindung ist in der Zeichnung dargestellt und in der nachfolgenden Beschreibung näher erläutert.

### Beschreibung des Ausführungsbeispiels

Ein Nutzkraftfahrzeug-Bremssystem hat einen elektro-pneumatischen Bremswertgeber 1, der mit einem Sollwertgeber in Form eines Potentiometers ausgerüstet ist und mit dem Fahrzeug-Bremszylinder 2, 3, 4, 5 mit Bremsdruck versorgende Ventile 6, 7, 8 und 9, 10, 11, 12 pneumatisch bzw. elektrisch ansteuerbar sind. Den Bremszylindern 2, 3, 4, 5 sind Drucksensoren 13, 14, 15, 16 beigeordnet. Außerdem sind die den Bremszylindern 2, 3, 4, 5 zugeordneten Fahrzeugräder mit Drehzahlsensoren 17, 18, 19, 20 bestückt.

Zur Druckluftversorgung des Systems dient ein Kompressor 21, der von einem Fahrzeugmotor 22 über eine feste Übersetzung, z.B. über einen Keilriemen angetrieben wird. Der Fahrzeugmotor 22 hat einen Drehzahlmesser 23 und einen Kühlwasser-Thermostaten 24.

Vom Kompressor 21 gelangt die Druckluft über einen Druckregler 25 und ein Vierkreis-Schutzventil 26 in drei Vorratsbehälter 27, 28, 29, zwei für den Zugwagen und einen für eine Anhängerbremse. Jedem Vorratsbehälter 27, 28, 29 ist ebenfalls ein Drucksensor 30, 31, 32 beigeordnet.

Alle Sensoren 13, 14, 15, 16 und 30, 31, 32 sowie der Bremswertgeber 1, die Drehzahlsensoren 17, 18, 19, 20 und 23 und der Kühlwasser-Thermostat 24 sind über elektrische Leitungsverbindungen an ein elektronisches Steuergerät 33 angeschlossen; diese Leitungsverbindungen sind zwecks Übersichtlichkeit der Zeichnung nur mit jeweils einem Strich am jeweiligen Sensor dargestellt. Das Steuergerät 33 ist mittels Mehrpolkabel 34 mit einer Anzeige 35 am Armaturenbrett des Fahrzeugs verbunden, und es gibt dort auch eine Warnlampe 36, die ebenfalls an das Steuergerät 33 angeschlossen ist. Schließlich befindet sich im Fahrerhaus des Fahrzeugs noch ein Außentemperatur-Thermometer 37 und ein Feuchtigkeitsmesser 38 mit Anschluß an das Steuergerät 33.

### Wirkungsweise

Beim Betrieb des Fahrzeuges liefern alle Sensoren 13, 14, 15, 16 und 30, 31, 32, sowie 23 und 24 und das Sollwert-Potentiometer 1' am Bremswertgeber 1 Meßwerte an das elektronische Steuergerät 33. Auf der Anzeige 35 im Fahrerhaus kann der Fahrer unter anderem die momentanen Vorratsdrücke, die Betriebstemperatur des Motors und dessen Drehzahl ablesen. Eine Warnung kann dem Fahrer über die Anzeige 35 oder über die Warnlampe 36 oder eventuell auch akustisch zu teil werden.

Neben der Kühlwassertemperatur ist die Umgebungstemperatur durch das Thermometer 37 und die Luftfeuchte durch den Feuchtigkeitsmesser 38 dem elektronischen Steuergerät 33 bekannt.

Durch Signalverknüpfung im Steuergerät 33 und eventuelle Berechnungen im Steuergerät 33 oder weiterer im Steuergerät 33 abgespeicherte Fahrzeug- und/oder Bremsanlagenparameter lassen sich nun folgende Überprüfungen durchführen:
I. Förderleistung des Kompressors 21
   Abhängig von der Motordrehzahl und der Betriebstemperatur wird der Druckanstieg über der Zeit in den Vorratsbehältern 27, 28, 29 vom Steuergerät 33 beobachtet. Bei Überschreiten eines oberen Grenzwertes für die Füllzeit sowie bei Unterschreiten eines unteren Grenzwertes wird eine Warnung an den Fahrer gegeben.
II. Abschaltdruck des Druckreglers 25
   Wird der im Steuergerät 33 einprogrammierte Abschaltdruck des Druckreglers 25 um eine gewisse Toleranz überschritten, wird eine Warnung an den Fahrer ausgegeben.
III. Luftverbrauch pro Bremsung
   Abhängig von den installierten Bremszylindervolumina, die in das Steuergerät 33 einprogrammiert sind, und abhängig von dem Druck in den Bremszylindern 2, 3, 4 und 5 beim Bremsen, der durch das Sollwert-Potentiometer 1' und/oder die Drucksensoren 13, 14, 15, 16 dem Steuergerät 33 bekannt ist, entsteht in den Vorratsbehältern 28, 29 ein Druckabfall, der von den Drucksensoren 31 und 32 erfaßt wird. Mit diesen Werten ist der Luftverbrauch pro Bremsung zu ermitteln.
   Bei neuen Bremsbelägen bzw. neu eingestellten Gestängestellern wird der Druckabfall pro Bremsung geringer sein. Mit zunehmendem Belagverschleiß wird der Druckabfall bei gleichem Bremsdrucksollwert zunehmen (größeres Volumen in den Bremszylindern). Bei automatischem Gestängesteller wird der Druckabfall nach dem Rückstellen durch den Gestängesteller wieder geringer werden, so daß sich hier eine Art sägezahnförmiger Verlauf des Druckabfalls über der Zeit ergibt.
   Da jede Bremsung mit einem anderen Bremsdrucksollwert erfolgt, muß dies vom Steuergerät 33 z.B. durch die Berechnung eines "normierten Druckabfalls" berücksichtigt werden (oder Auswahl von Bremsungen mit etwa gleichem Druck). Überschreitet der Druckabfall einen bestimmten, im Steuergerät 33 einprogrammierten Grenzwert (dieser Grenzwert kann auch aus den Druckabfallwerten nach Inbetriebnahme der Bremsanlage (Neuzustand) abgeleitet werden) oder
   hat der Gestängesteller eine vorgegebene Zahl von Rückstellungen durchgeführt (Zählung der Sägezähne im Steuergerät 33), erhält der Fahrer eine Warnung wegen übermäßigen Belagverschließes bzw. Wasser in den Vorratsbehältern 28 und 29.
IV. Dichtheit der Anlage
   a) Vorratsseite der Bremsanlage
      Wird nicht gebremst (Information liegt im Steuergerät 33 über das Sollwert-Potentiometer 1' vor), darf der Vorratsdruck (gemessen mit den Drucksensoren 31 und 32) pro Zeiteinheit nur um einen vorgegebenen, einprogrammierten Wert abfallen. Andernfalls wird die Anzeige 35 oder 36 aktiviert. Dies gilt insbesondere, falls der Motor 22 steht (keine Nachförderung, Information über Drehzahlsensor 23). Bei Bremsungen und laufendem Motor 22 tritt die Überprüfung lt. I in Funktion, um die Nachförderung zu überwachen.
   b) Übertragungseinrichtung bis einschließlich Bremszylinder
      Ein zu hoher Luftverbrauch pro Bremsung kann auch auf Undichtigkeiten zurückzuführen sein.
      Um Gewißheit über die Ursache zu erhalten, kann folgende Prüfung durchgeführt werden:
      - Voraussetzung:: Fahrzeug steht (Information über Raddrehzahlsensoren 17, 18, 19, 20), Motor 22 steht (Information über Motordrehzahlsensor 23).

      Durch das elektronische Steuergerät 33 wird ein Teilbremsdruck, z.B. 3 bar eingesteuert und eine bestimmte Zeit gehalten (Ventile 6, 7, 8 und 10, 11, 12 in Haltestellung, keine Drucknachregelung).
      Während dieser Zeit darf der Druck in den Bremszylindern 2, 3, 4, 5, gemessen mit den Drucksensoren 13, 14, 15, 16, nicht unter einen vorgegebenen Wert abfallen. Andernfalls erfolgt Warnung an den Fahrer.
      Dieser Prüfzyklus kann z.B. vom Fahrer durch einen Schalter eingeleitet werden, oder durch eine Eingabe über eine Steuergerät-Diagnoseschnittstelle.
      Eine automatische Auslösung des Prüfzyklus in bestimmten Zeitabständen ist ebenfalls denkbar. Falls der Fahrer vor Ablauf der Prüfzeit den Motor 22 wieder startet (Signal von 23), wird der Prüfzyklus automatisch abgebrochen.
      In jedem Fall überprüft das Steuergerät 33 vor Ingangsetzen des Prüfzyklus, ob die Voraussetzungen Fahrzeug- und Motorstillstand erfüllt sind.
      Dadurch, daß alle Bremszylinder 2, 3, 4, 5 mit Drucksensoren 13, 14, 15, 16 bestückt sind, ist auch eine gezielte Fehlerausgabe möglich, an welcher Achse bzw. an welchem Rad der Druck abfällt.
      Eine Feststellbremsanlage und die Anhänger-Bremse können ebenfalls mit in die Prüfungen einbezogen werden.

Die verwendeten Sensoren und Signalgeber sind handelsüblich und bereits auch einzeln oder auch in Teilgruppen in Nutzfahrzeugen zusammen mit einem elektronisch gesteuerten Bremssystem und eventuell elektronischer Motorkontrolle verwendet.

Gemäß der vorliegenden Erfindung ist eine Selbstkontrolle des gesamten elektro-pneumatischen Bremssystems möglich.

Durch softwaremäßige Verknüpfungen im Steuergerät 33 können alle genannten Prüfungen mit geringstem Zusatzaufwand durchgeführt werden. Es ist verständlich, daß dadurch die Sicherheit im Fahrbetrieb erhöht und die Fehlersuche in der Werkstatt erleichtert werden.

## Patentansprüche

1. Elektro-pneumatisches Bremssystem für Nutzkraftfahrzeuge mit elektrischer Vorgabe des Bremsdruck-Sollwertes von einem fußbetätigten Bremswertgeber (1), mit Drucksensoren (13, 14, 15, 16) an Bremszylindern (2, 3, 4, 5) des Fahrzeugs, mit Raddrehzahl-Signalgebern (17, 18, 19, 20) an den Fahrzeugrädern, mit Vorratsbehältern (27, 28, 29) für Druckluft und mit einer die Vorratsbehälter mit den Bremszylindern (2, 3, 4, 5) verbindende Übertragungseinrichtung sowie mit einem elektronischen Steuergerät (33) als Meßwerteingabe, Rechenzentrum und Ansteuerimpulsabgabe, an das der Bremswertgeber (1), die Drucksensoren (13, 14, 15, 16) und die Signalgeber (17, 18, 19, 20) angeschlossen sind und mit dem die Intaktheit des Bremssystems überprüfbar ist,
dadurch gekennzeichnet,
daß die Arbeits-Volumina der Bremszylinder (2, 3, 4, 5) in das elektronische Steuergerät (33) einprogrammiert sind und daß mit Hilfe von den Vorratsbehältern (27, 28, 29) zugeordneten Drucksensoren (30, 31, 32) und des Sollwertes des Bremswertgebers (1) ein beim Bremsen durch Bremsbelag-Abnutzung, bei Verwendung einer automatischen Nachstellvorrichtung auch sägezahnförmige verlaufender, zunehmender Druckabfall in den Vorratsbehältern (27, 28, 29) erfaßbar und dem Steuergerät (33) mitteilbar ist und daß bei Überschreiten eines Grenzwertes mittels des elektronischen Steuergerätes (33) eine Warnung an den Fahrer ausgebbar ist.

2. Elektro-pneumatisches Bremssystem für Nutzfahrzeuge nach Anspruch 1, dadurch gekennzeichnet, daß mittels der Signale der den Vorratsbehältern (27, 28, 29) zugeordneten Drucksensoren (30, 31, 32) und eines Negativ-Signals vom Bremswertgeber (1) bei nicht betätigter Bremse ein Druckabfall über der Zeit erfaßbar ist und daß vom elektronischen Steuergerät (33) bei Unterschreitung eines Grenzwertes des Druckabfalls eine Warnung an den Fahrer ausgebbar ist.

3. Elektro-pneumatisches Bremssystem für Nutzfahrzeuge nach Anspruch 1, dadurch gekennzeichnet, daß mittels der Signale der Raddrehzahl-Signalgeber (17, 18, 19, 20) und eines Drehzahlmessers (23) des Fahrzeug-Motors (22) bei stehendem Fahrzeug und/oder bei stehendem Motor (22) vom elektronischen Steuergerät (33) für eine vorgegebene Zeit ein Teilbremsdruck einsteuerbar und eine bestimmte Zeit haltbar ist und mittels der den Bremszylindern (2, 3, 4, 5) zugeordneten Drucksensoren (13, 14, 15, 16) ein Druckabfall meßbar ist und daß bei Überschreitung eines Grenzwertes mittels des elektronischen Steuergerätes (33) eine Warnung an den Fahrer ausgebbar ist.

4. Elektro-pneumatisches Bremssystem für Nutzfahrzeuge nach Anspruch 1, dadurch gekennzeichnet, daß abhängig von den Signalen eines Drehzahlmessers (23) des Fahrzeug-Motors (22) und von denen eines Kühlwasser-Thermostaten (24) mittels der an den Vorratsbehältern (27, 28, 29) angebrachten Drucksensoren (30, 31, 32) der von einem motorbetriebenen Kompressor (21) des Fahrzeugs bewirkte Druckanstieg über der Zeit meßbar ist und daß bei einer Überschreitung oder Unterschreitung von Grenzwerten für die Füllzeit wenigstens eines Vorratsbehälters (27, 28, 29) mittels des elektronischen Steuergerätes (33) eine Warnung an den Fahrer ausgebbar ist.

5. Elektro-pneumatisches Bremssystem für Nutzfahrzeuge nach Anspruch 4, dadurch gekennzeichnet, daß der Abschaltdruck eines dem Kompressor (21) nachgeordneten Druckreglers (25) in das elektronische Steuergerät (33) einprogrammiert ist und daß bei Überschreitung eines Grenzwertes für den Abschaltdruck mittels des elektronischen Steuergerätes (33) eine Warnung an den Fahrer ausgebbar ist.

6. Elektro-pneumatisches Bremssystem nach wenigstens einem der Ansprüche 1 bis 5, dadurch gekennzeichnet, daß ein Prüfzyklus für die Intaktheit des Bremssystems vom Fahrer mittels eines elektrischen Schalters einleitbar ist.

7. Elektro-pneumatisches Bremssystem nach wenigstens einem der Ansprüche 1 bis 5, dadurch gekennzeichnet, daß ein Prüfzyklus für die Intaktheit des Bremssystems automatisch in Zeitabständen vom elektronischen Steuergerät (33) einleitbar ist.

8. Elektro-pneumatisches Bremssystem nach Anspruch 7, dadurch gekennzeichnet, daß der automatisch anlaufende Prüfzyklus durch ein Signal des Drehzahlmessers (23) des Fahrzeug-Motors (22) zu unterbrechen ist.

9. Elektro-pneumatisches Bremssystem nach Anspruch 7 oder 8, dadurch gekennzeichnet, daß mit dem elektronischen Steuergerät (33) anhand von Signalen der Raddrehzahl-Signalgeber (17, 18, 19, 20) und des Drehzahlmessers (23) des Fahrzeug-Motors (22) vor Anlauf des Prüfzyklus der Fahrzeug- und Motorstillstand feststellbar ist.

## Claims

1. Electro-pneumatic brake system for utility vehicles with the set value for the brake pressure being electrically prescribed by a foot-actuated brake value signal transmitter (1), with pressure sensors (13, 14, 15, 16) at brake cylinders (2, 3, 4, 5) of the vehicle, with wheel speed signal transmitters (17, 18, 19, 20) at the vehicle wheels, with reservoir containers (27, 28, 29) for compressed air and with a transmission device which connects the reservoir containers to the brake cylinders (2, 3, 4, 5) and with an electronic control device (33) as measured value input, computing centre and drive pulse emitter, to which the brake value signal transmitter (1), the pressure sensors (13, 14, 15, 16) and the signal transmitters (17, 18, 19, 20) are connected and with which the intactness of the brake system can be tested, characterized in that the working volumes of the brake cylinders (2, 3, 4, 5) are programmed into the electronic control device (33), and in that a pressure drop, which increases when braking as a result of wearing of the brake lining and even has a saw-tooth shaped characteristic curve when an automatic readjustment device is used, can be detected in the reservoir containers (27, 28, 29) and indicated to the control device (33), with the aid of pressure sensors (30, 31, 32) assigned to the reservoir containers (27, 28, 29) and of the set value of the brake value signal transmitter (1), and in that a warning can be issued to the driver by means of the electronic control device (33) when a limit value is exceeded.

2. Electro-pneumatic brake system for utility vehicles according to Claim 1, characterized in that a pressure drop over time can be detected by means of the signals of the pressure sensors (30, 31, 32) assigned to the reservoir containers (27, 28, 29) and a negative signal by the brake value signal transmitter (1) when the brake is not actuated, and in that a warning can be issued to the driver by the electronic control device (33) when the pressure drop drops below a limit value.

3. Electro-pneumatic brake system for utility vehicles according to Claim 1, characterized in that a partial brake pressure can be applied by the electronic control device (33) for a predetermined time, and can be held a specific time, by means of the signals of the wheel speed signal transmitters (17, 18, 19, 20) and an rpm meter (23) of the vehicle engine (22) when the vehicle is stationary and/or when the engine (22) is stationary, and a pressure drop can be measured by means of the pressure sensors (13, 14, 15, 16) assigned to the brake cylinders (2, 3, 4, 5), and in that a warning can be issued to the driver by means of the electronic control device (33) when a limit value is exceeded.

4. Electro-pneumatic brake system for utility vehicles according to Claim 1, characterized in that the pressure rise over time brought about by an engine-operated compressor (21) of the vehicle can be measured as a function of the signals of an rpm meter (23) of the vehicle engine (22), and as a function of the signals of a cooling water thermostat (24) by means of the pressure sensors (30, 31, 32) which are attached to the reservoir containers (27, 28, 29), and in that a warning can be issued to the driver by means of the electronic control device (33) in the case of the filling time of at least one reservoir container (27, 28, 29) exceeding or dropping below limit values.

5. Electro-pneumatic brake system for utility vehicles according to Claim 4, characterized in that the switch-off pressure of a pressure controller (25) which is assigned downstream of the compressor (21) can be programmed into the electronic control device (33), and in that a warning can be issued to the driver by means of the electronic control device (33) when a limit value for the switch-off pressure is exceeded.

6. Electro-pneumatic brake system according to at least one of Claims 1 to 5, characterized in that a test cycle for the intactness of the brake system can be initiated by the driver by means of an electric switch.

7. Electro-pneumatic brake system according to at least one of Claims 1 to 5, characterized in that a test cycle for the intactness of the brake system can be initiated automatically by the electronic control device (33) at time intervals.

8. Electro-pneumatic brake system according to Claim 7, characterized in that the automatically starting-up test cycle can be interrupted by a signal of the rpm meter (23) of the vehicle engine (22).

9. Electro-pneumatic brake system according to Claim 7 or 8, characterized in that before the test cycle starts the stationary state of the vehicle and engine can be detected with the electonic control device (33) on the basis of signals of the wheel speed signal transmitter (17, 18, 19, 20) and of the rpm meter (23) of the vehicle engine (22).

## Revendications

1. Système de freinage électropneumatique pour véhicules utilitaires avec prédéfinition électrique de la valeur de consigne de la pression de freinage par un capteur de valeurs de freinage (1) actionné au pied, avec des détecteurs de pression (13, 14, 15, 16) sur les cylindres de frein (2, 3, 4, 5) du véhicule, avec des capteurs de signaux de vitesse de rotation des roues (17, 18, 19, 20) sur les roues du véhicule, avec des réservoirs (27, 28, 29) pour l'air comprimé et avec un dispositif de transfert reliant les réservoirs avec les cylindres de frein (2, 3, 4, 5) ainsi qu'avec un appareil électronique de commande (33) jouant le rôle d'introducteur de valeurs de mesure, de centre de calcul et d'émetteur d'impulsions de commande, auquel sont raccordés le capteur de valeurs de freinage (1), les détecteurs de pression (13, 14, 15, 16) et les capteurs de signaux (17, 18, 19, 20), et avec lequel l'intégrité du système de freinage est susceptible d'être vérifiée,
système de freinage caractérisé en ce que les volumes de fonctionnement des cylindres de frein (2, 3, 4, 5) sont programmés dans l'appareil électronique de commande (33) et en ce qu'à l'aide de détecteurs de pression (30, 31, 32) associés aux réservoirs (27, 28, 29) et de la valeur de consigne du capteur de valeurs de freinage (1), une chute de pression dans les réservoirs (27, 28, 29), croissant lors du freinage du fait de l'usure des garnitures de frein et évoluant également en dents de scie lors de l'utilisation d'un dispositif automatique de réajustement, est susceptible d'être détectée dans les réservoirs (27, 28, 29) et d'être communiquée à l'appareil de commande (33), et en ce que, lors du dépassement d'une valeur limite, un avertissement est susceptible d'être donné au conducteur au moyen de l'appareil électronique de commande (33).

2. Système de freinage électropneumatique pour véhicules utilitaires selon la revendication 1, caractérisé en ce qu'au moyen des signaux des détecteurs de pression (30, 31, 32) associés aux réservoirs (27, 28, 29) et d'un signal négatif en provenance du capteur de valeurs de freinage (1) lorsque les freins ne sont pas actionnés, une chute de pression est susceptible d'être détectée en fonction du temps, et en ce que, lors du franchissement vers le bas d'une valeur limite de la chute de pression, un avertissement est susceptible d'être délivré au conducteur à partir de l'appareil électronique de commande (33).

3. Système de freinage électropneumatique pour véhicules utilitaires selon la revendication 1, caractérisé en ce qu'au moyen des signaux des capteurs de signaux de vitesse de rotation de roue (17, 18, 19, 20) et d'un mesureur (23) de la vitesse de rotation du moteur du véhicule (22) lorsque le véhicule est à l'arrêt et/ou lorsque le moteur (22) est à l'arrêt, une pression de freinage partielle est susceptible d'être commandée pour un temps prédéfini à partir de l'appareil électronique de commande (33) et peut être maintenue pendant un temps déterminé et, au moyen des détecteurs de pression (13, 14, 15, 16) associés aux cylindres de frein (2, 3, 4, 5), une chute de pression est susceptible d'être mesurée, et en ce que lors, du dépassement d'une valeur limite, un avertissement est susceptible d'être donné au conducteur au moyen d'un appareil électronique de commande (33).

4. Système de freinage électropneumatique pour véhicules utilitaires selon la revendication 1, caractérisé en ce qu'en fonction des signaux d'un mesureur de vitesse de rotation (23) du moteur (22) du véhicule et de ceux d'un thermostat (24) d'eau de refroidissement, l'accroissement de pression provoqué par un compresseur (21) entraîné par le moteur du véhicule est susceptible d'être mesuré en fonction du temps au moyen des détecteurs de pression (30, 31, 32) installés sur les réservoirs (27, 28, 29) et en ce que, lors d'un dépassement ou d'un franchissement vers le bas de valeurs limites pour le temps de remplissage d'au moins un réservoir (27, 28, 29), un avertissement est susceptible d'être donné au conducteur au moyen de l'appareil électronique de commande (33).

5. Système de freinage électropneumatique pour véhicules utilitaires selon la revendication 4, caractérisé en ce que la pression de coupure d'un régulateur de pression (25) disposé à la suite du compresseur (21), est programmée dans l'appareil électronique de commande (33), et en ce que, lors du dépassement d'une valeur limite pour la pression de coupure, un avertissement est susceptible d'être donné au conducteur au moyen de l'appareil électronique de commande (33).

6. Système de freinage électropneumatique pour véhicules utilitaires selon au moins une des revendications 1 à 5, caractérisé en ce qu'un cycle de contrôle pour l'intégrité du système de freinage est susceptible d'être déclenché par le conducteur au moyen d'un commutateur électrique.

7. Système de freinage électropneumatique pour véhicules utilitaires selon au moins l'une des revendications 1 à 5, caractérisé en ce qu'un cycle de contrôle pour l'intégrité du système de freinage est susceptible d'être déclenché automatiquement à des intervalles de temps donnés, à partir de l'appareil électronique de commande (33).

8. Système de freinage électropneumatique pour véhicules utilitaires selon la revendication 7, caractérisé en ce que le cycle de contrôle se déroulant automatiquement peut être interrompu par un signal du mesureur de vitesse de rotation (23) du moteur (22) du véhicule.

9. Système de freinage électropneumatique pour véhicules utilitaires selon la revendication 7 ou la revendication 8, caractérisé en ce qu'avec l'appareil électronique de commande (33) et à l'aide de signaux des capteurs de signaux de vitesse de rotation de roues (17, 18, 19, 20) du mesureur de vitesse de rotation (23) du moteur (22) du véhicule, l'arrêt du véhicule et du moteur est susceptible d'être constaté avant le déroulement du cycle de contrôle.
